(19) Europäisches Patentamt / European Patent Office / Office européen des brevets

(11) **EP 2 000 797 A1**

(12) **EUROPEAN PATENT APPLICATION**

(43) Date of publication:
**10.12.2008 Bulletin 2008/50**

(51) Int Cl.:
***G01N 27/12*** *(2006.01)*

(21) Application number: **07109882.6**

(22) Date of filing: **08.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Sociedad española de carburos metalicos, S.A.**
**08009 Barcelona (ES)**

(72) Inventor: **The designation of the inventor has not yet been filed**

(74) Representative: **Ponti Sales, Adelaida**
**Oficina Ponti**
**C. Consell de Cent, 322**
**08007 Barcelona (ES)**

(54) **A material, a microsensor comprising a material, use of the microsensor, and process of making the material**

(57) The present invention provides a material, a microsensor comprising material, use of the microsensor for detecting oxygen at trace levels in a stream of $CO_2$. A modified sol-gel route that results in a good dispersion of nanotubes within the titania matrix has been developed. The obtained microsensors show high sensitivity towards oxygen, reversible response in $CO_2$, good stability and fast response.

EP 2 000 797 A1

## Description

### Field of the invention

The present invention relates to a new hybrid material useful for detecting traces of oxygen in a stream of gas, to a process of making it and to a microsensor comprising it for using in environments wherein the oxygen may be considered to be a pollutant species.

Particularly, the new hybrid material is aimed at detecting oxygen at trace levels in a stream of $CO_2$. A modified sol-gel route that results in a good dispersion of nanotubes within the titania matrix has been developed. The obtained microsensors show high sensitivity towards oxygen, reversible response in $CO_2$, good stability and fast response.

### Background of the invention

Nowadays, there is a considerable demand for low-cost, reliable and accurate sensors for many applications. The so-called solid state sensors have great advantages respect the other kind of sensors (optical and spectroscopic system). They are based on the change in the physical and/or chemical properties of their sensing materials when exposed to different gas atmospheres.

In some industrial processes such as in the production of carbonated beverages, the presence of oxygen must be detected and controlled in the ppm range. Some authors have reported the detection of oxygen at ppm levels using gas sensors: R.K. Sharma, M.C. Bhatnagar, Improvement of the oxygen gas sensitivity in doped TiO2 thick films, Sens. Actuators B: Chem. 56 (1999) 215-219*; and* Y.Hu, O.K. Tang, J. S. Pan, H. Huang, W. Cao, The effect of annealing temperature on the sensing properties of low temperature nano-sized SrTiO3 oxygen gas sensor, Sens. Actuators B: Chem. 108 (2005) 244-249.

In most cases the sensors were developed through thin film technology. For industrial application, the most widespread is thick film technology because its costs are lower when small/medium series of sensors are fabricated. Additionally, thick film technology is more flexible when small amounts of catalysts or sensitizers need to be included in the gas sensitive material. They can be used in complex systems as a sensor arrays. Furthermore, these sensors are capable to work on-line without need of specially trained operators.

However, the detection of traces of oxygen is still a very difficult goal to reach using thick film sensors, and usually high operating temperatures (>700˚C) are needed. Although a thick film oxygen sensor working at 400˚C was reported by Sharma and co-workers with titanium dioxide as the semiconductor material, the detected oxygen concentration was near 1200 ppm, which is rather high for most applications.

Titanium dioxide is the semiconductor material most widely used for oxygen detection: U. Kirner, K.D. Schierbaum, W. Gopel, B. Leibold, N. Nicoloso, W. Weppner, D. Fischer, W. F. Chu, Low and high-temperature TiO2 oxygen sensors, Sens. Actuators B: Chem.1 (1990) 103-107. Titania based sensors are bulk conductivity sensors. The oxygen detection mechanism implies the diffusion of oxygen ions in the bulk of the material and this occurs provided the material is operated at high temperatures (700-1000˚C), then, a rutile crystalline phase is present. This leads to high power consumption, which is not desirable for most electronic applications.

On the other hand, titania showing an anatase crystalline phase has more free electrons than rutile titania: H. Tang, K. Prasad, R. Sanjinés, F. Lévy, TiO2 Anatase thin films as gas sensors, Sens. Actuators B: Chem. 26 1-3 (1995) 71-75.

For anatase titania, oxygen detection can be associated to a surface reaction, which takes place at lower temperatures (400-500˚C).

When titania is doped with pentavalent ions, e.g. $Nb^{5+}$, such ions get into the anatase titania crystalline structure, giving rise to a hindering in the phase transition to rutile and an inhibition in grain growth. While in undoped titania, the change from anatase to rutile starts at about 600˚C, in doped titania, the transition temperature is higher, around 750˚C. This effect is attributed to the extra valence of niobium ions in comparison with titanium ones, which reduces oxygen vacancies in the anantase phase, retarding the transformation to rutile *(*J. Arbiol, J. Cerdà, G. Dezanneau, A. Cirera, F. Peiró, A. Cornet, J. R. Morante, Effects of Nb doping on the TiO2 anatase-to-rutile phase transition, J. Appl. Phys. 92 (2002) 853-861*, and* A. Ruiz, G. Dezanneau, J. Arbiol, A. Cornet, J.R. Morante, Study of the influence of Nb content and sintering temperature on TiO2 sensing films, Thin Solid Films 436 (2003) 90-94*).*

Furthermore, grain growth is inhibited due to the stress induced in the anatase structure by the substitutional $Nb^{5+}$ ions, with a slightly higher ionic radius value with respect to $Ti^{4+}$. Smaller grains imply more active area, which increases the surface to volume ratio and thus sensitivity.

It has been reported that Nb-doped titania shows higher sensitivity towards oxygen and shorter response time than pure $TiO_2$. The doped material also shows lower impedance at low operating temperatures and hence, the design of the associated electronic circuit is simpler (J. Arbiol, J. Cerdà, G. Dezanneau, A. Cirera, F. Peiró, A. Cornet, J. R. Morante, Effects of Nb doping on the TiO2 anatase-to-rutile phase transition, J. Appl.Phys. 92 (2002) 853-861*).* Arbiol reported that there is an optimum for the concentration of Nb in $TiO_2$. The best atomic ratio between Nb and Ti was found to be 3%. However, the gas sensing properties of this material were not investigated in this previous prior art.

On the other hand, an hybrid $SnO_2$ or $WO_3$ and carbon nanotube materials have been shown to possess high sensitivity to some air pollutant species at low operating temperatures. However, these hybrid materials have not been demonstrated to be sensitive to oxygen.

Therefore, there is still a need to search new materials having a higher responsiveness towards oxygen than the described, at an operating temperature lower than 700˚C.

**Briefly discussion of the invention**

A first aspect of the present invention is to provide a new hybrid material which comprises a matrix of titanium dioxide including an anatase crystalline phase with carbon nanotubes dispersed within. This material is useful for making a microsensor for detecting traces of oxygen in a stream of a gas containing oxygen.

A second aspect of the present invention is to provide a process of making the hybrid material via a new route: a modified sol-gel process.

A third aspect of the present invention is to provide a microsensor for detecting traces of oxygen comprising a substrate wherein the hybrid material is deposited. Additionally, elements such as contact pads, connecting wires, diffusion barrier and heater may be also present.

Finally, the present invention provides a process of making a microsensor according to the third aspect of the invention.

The microsensor comprising the hybrid material according to the present invention is useful for detecting traces of oxygen, in a stream of gas containing oxygen in small amounts, with a detection limit towards oxygen as low as 6 ppm at an operating temperature ranging from 600˚C to 300˚C.

**Brief description of the figures**

The terms "calcination" or "annealing" that appear at the following figures are well know for a person skilled in the art. However, a brief explanation is included bellow for better understanding.

At the present invention, the term "calcination" means the thermal treatment carried out for making the hybrid material. The hybrid material undergo a thermal treatment to stabilize their crystalline phase.

At the present invention, the term "annealed" means the thermal treatment carried out for making the microsensor. The hybrid material, once deposited onto the sensor substrate is annealed for ensuring a good adherence of the hybrid material to the substrate. Therefore, an annealing treatment is a thermal treatment at a lower temperature than a calcination treatment.

**Figure 1** is a schematic design of an embodiment of a microsensor according to the present invention, wherein 1 is alumina substrate, 2 hybrid material, 3 and 7 are contact pads, 4 connecting wires, 5 diffusion barrier, and 6 heater.

**Figures 2 a-e** are XRD [X-Ray Diffraction] patterns and quantitative analysis of pure titania (a-b), Nb-doped titania (c-d) and $TiO_2$/MWCNT [Multi-wall carbon nanotubes] hybrid material (e) calcined at different temperatures.

**Figure 3** is a comparison among the full width half maximum (FWHM) of each crystalline phase of pure and Nb-doped $TiO_2$ as a function of the calcination temperature.

**Figures 4 a-b** present Raman spectra of $TiO_2$ and Nb-doped $TiO_2$ calcined at different temperatures.

**Figures 5 a-b** present Raman spectra at high frequencies (1200-1750 $cm^{-1}$) of Nb-doped $TiO_2$ calcined at 600˚C (a) and 700˚C (b). Dashed curves represent the peaks corresponding to carbon compounds present on the material surface.

**Figure 6** are BET surface area of the materials. It can be seen that surface area decreases when calcination temperature increases.

**Figures 7 a-b** present adsorption and desorption isotherms of $N_2$ at 77 K of $TiO_2$ (a) and Nb-doped $TiO_2$ (b).

**Figures 8 a-h** are SEM [Scanning Electron Microscope] images and histograms of pure titania (a-d) and Nb-doped titania (e-h) calcined at different temperatures.

**Figures 9 a-b** present the comparison of the responses of sensors made from pure titania (a) and Nb-doped titania (b) toward 20 ppm of oxygen, at different temperatures. The carrier gas employed was pure nitrogen.

**Figures 10 a-b** present responses toward 20 ppm of oxygen of sensors made from pure titania (a) and Nb-doped titania (b) calcined at 700˚C. The working/operating temperature was 500˚C and the carrier gas employed was pure nitrogen.

**Figure 11** is the response to 11 ppm of $O_2$ in $CO_2$ flow obtained by $TiO_2$/MWCNT microsensor calcined at 600˚C and at a working/operating temperature of 350˚C.

**Figure 12** is the response to 11 ppm of $O_2$ in $CO_2$ flow obtained by Nb-doped $TiO_2$/MWCNT microsensor calcined at 500˚C and at a working/operating temperature of 350˚C.

**Figure 13** is a ESEM [Environmental Scanning Electron Microscope] image recorded for $TiO_2$/MWCNT hybrid material calcined at 600˚C where some carbon nanotubes are visible.

**Detailed description of the invention**

The gas sensing properties of pure titania and Nb-doped titania were investigated by the present authors.

Pure titania and Nb-doped titania nanopowders were synthesized by a simplified sol-gel route. In order to set the crystalline structure of the active materials, they were calcined at four different temperatures: 600˚C, 700˚C, 800˚C and 900˚C. The obtained materials were characterized by different techniques. The objective of these characterizations was to obtain information about the material structure (chemical composition, crystalline phase, surface area, porosity and grain size) that could be related to its detection properties.

ICP spectroscopy [Inductively Coupled Plasma] technique was used to corroborate the content of Niobium in the doped material. The result is near to the nominal value, which is 3%. This confirms that the doping process was carried out correctly.

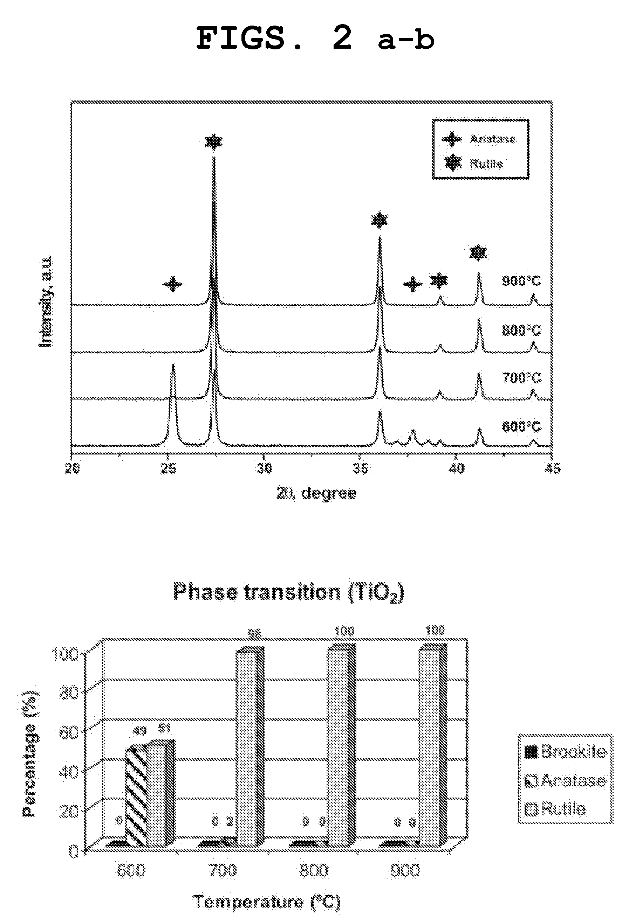

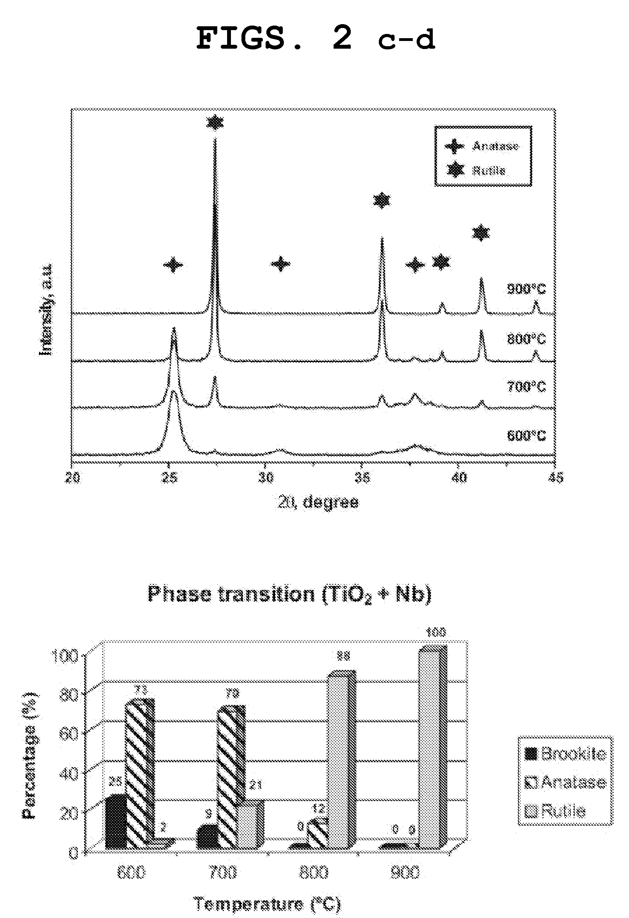

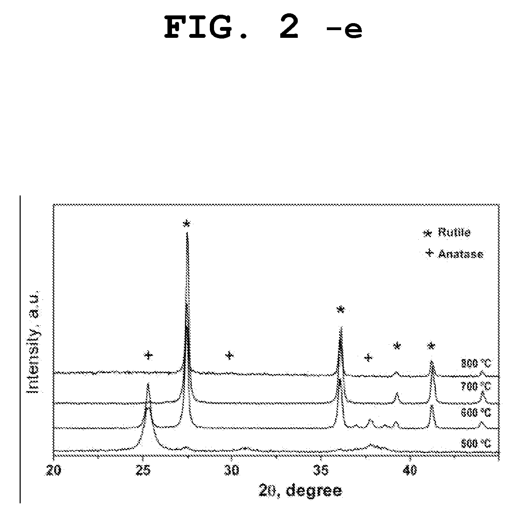

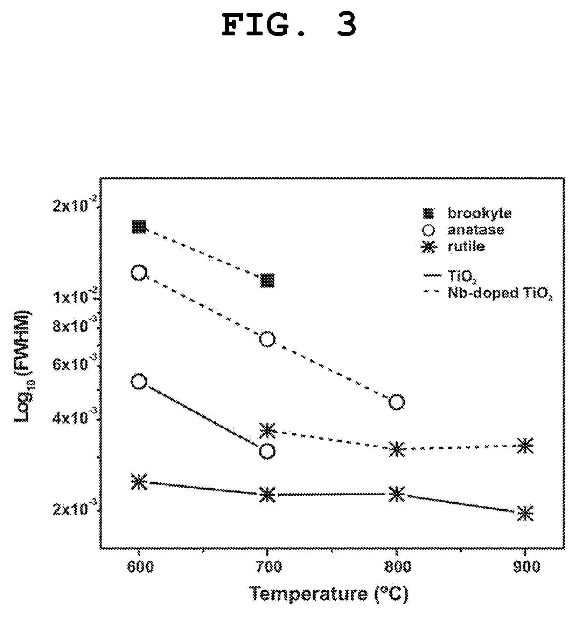

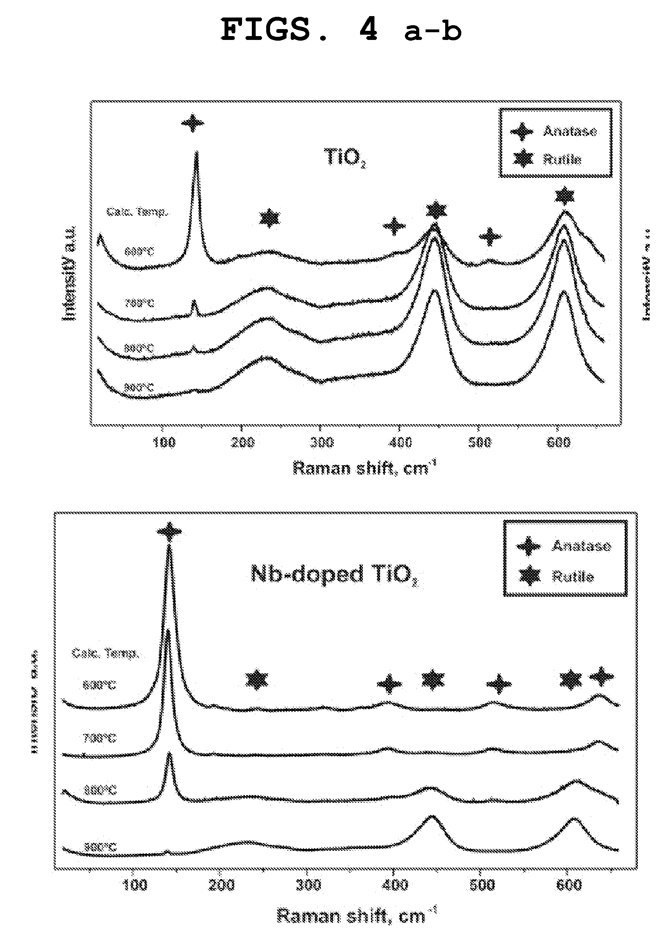

The XRD [X-Ray Diffraction] and Raman **(Figs.2-4)** results showed that the addition of Niobium ions to the titania lattice retards the phase transition in the crystalline structure of the material. It was observed that for doped materials calcined at 600˚C or 700˚C the dominant crystalline phase was anatase. For the other samples studied (800˚C and 900˚C), rutile was the most abundant crystalline phase. XRD technique also showed that the size of crystallites grew with calcination temperature. This growth is hindered by the addition of Niobium to the titania matrix.

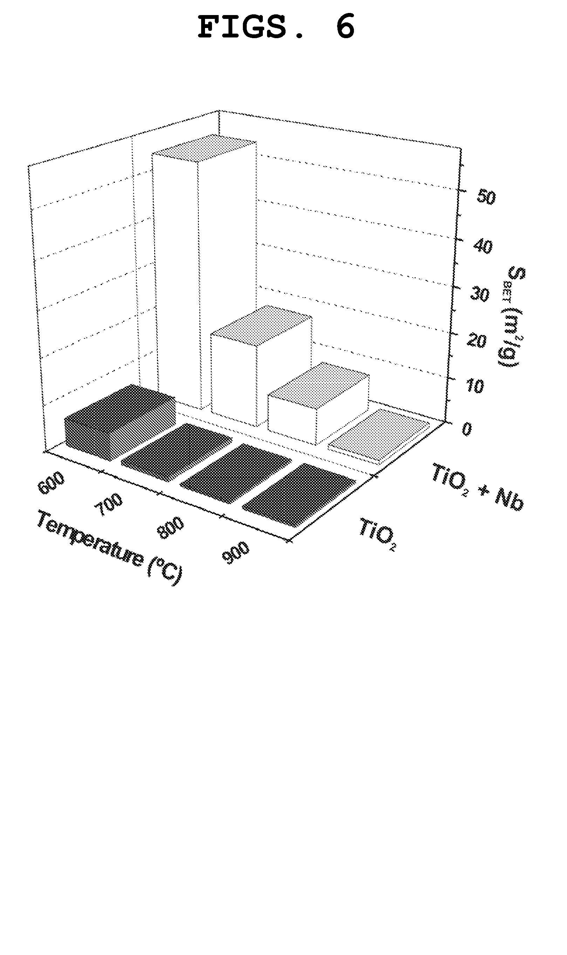

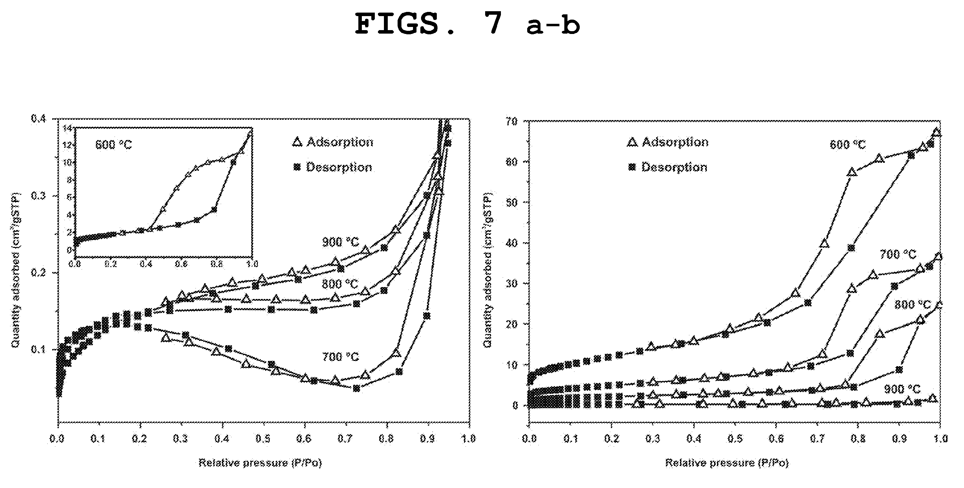

BET analyses (**Fig. 6**) showed that surface area decreases when calcination temperature increases. It was observed that the addition of Niobium retards the reduction in surface area with temperature and also improves the porosity (**Fig. 7**) of the resulting material.

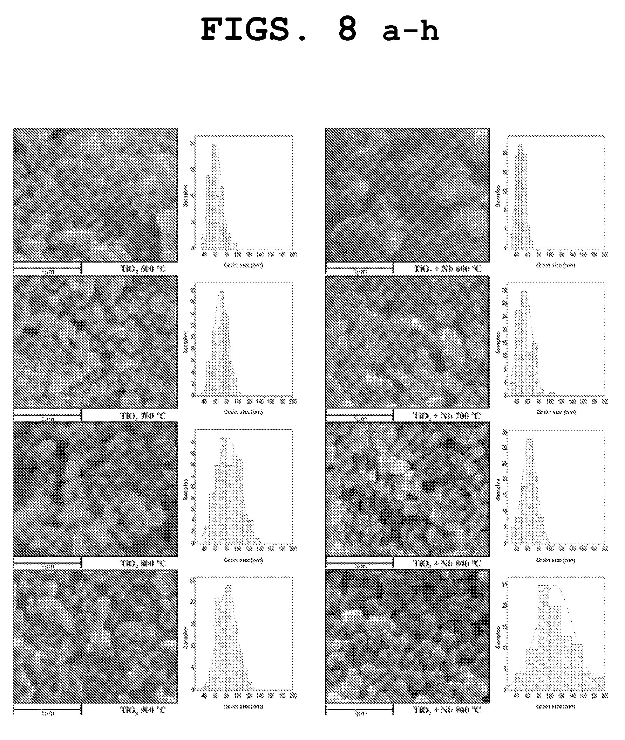

SEM analysis (**Fig. 8**) allowed for estimating the evolution in grain growth for the different layers studied. It was observed that the size of grains in doped materials is smaller than in pure titania for calcination temperatures between 600˚C and 800˚C. At 900˚C, the size of the grains in pure titania is almost the same as that at 800˚C. It appears that the fast grain growth at lower calcination temperatures stops at 800˚C. The grain size of pure $TiO_2$ calcined at 900˚C is similar to that of Nb-doped $TiO_2$ calcined at the same temperature. This may be attributed to the early stabilization of the material crystallinity in pure $TiO_2$. The pure titania does not have any additive that retards the phase transition. Thus, the material reaches the crystalline stabilization quickly. When this state is reached, the crystals stop fusing with others. This fact can explain why when a determined calcination temperature is reached, the grain size in pure titania remains almost constant.

The results of the physical characterization performed on the different materials indicated that doped samples calcined at low temperatures (600˚C or 700˚C) could be expected to show the best responsiveness towards oxygen. The high surface area and small grain size of such materials benefits the detection mechanism. Additionally, their crystalline phase, i.e., mostly anatase, should enable the detection of oxygen at moderate operating temperatures (300˚C - 600˚C). Finally, the niobium species present could also contribute to the catalytic process of detection.

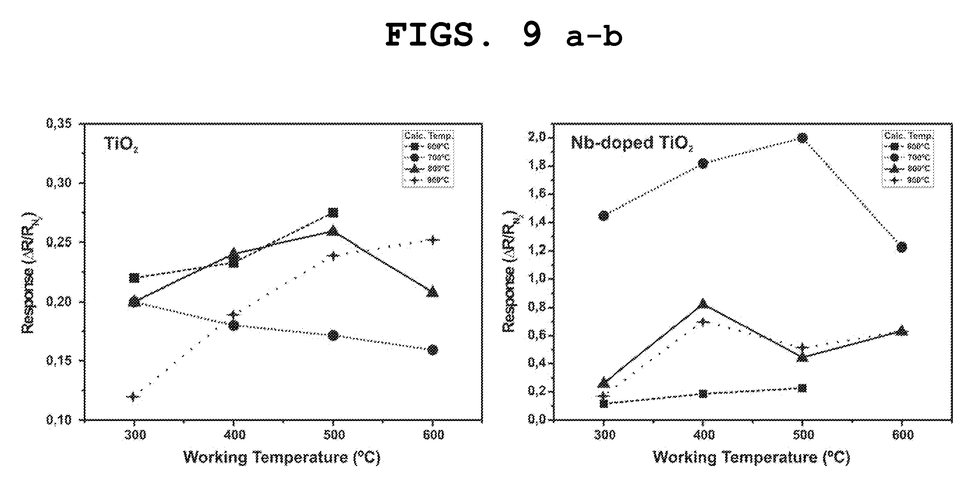

The measurements performed (**Fig. 9**) showed that Nb-doped samples, with response values up to 2.0, were more responsive to oxygen than pure titania samples, with response values below 0.26. Among the Nb-doped samples, those that were calcined at 700˚C had better responsiveness towards oxygen, with responses between 1.4 and 2.0. The highest responsiveness was obtained at a working/operating temperature of 500˚C.

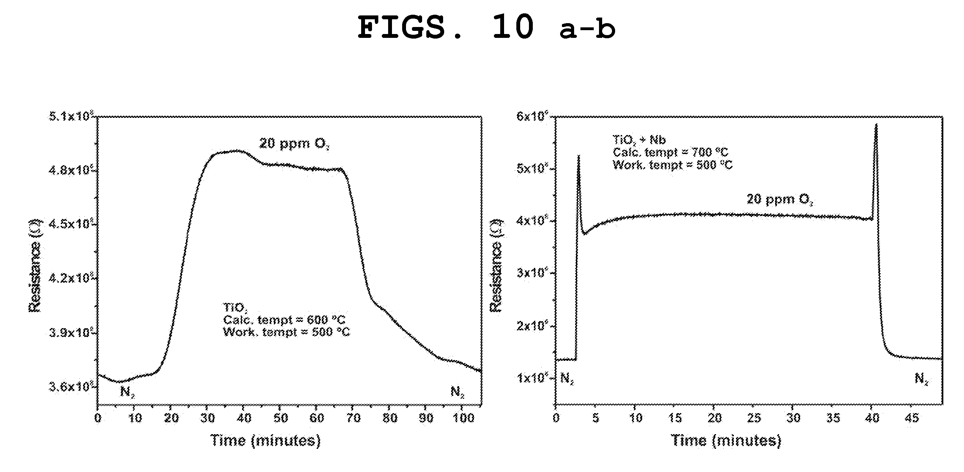

In spite of the fact that doped materials calcined at 600˚C had better physical characteristics than those calcined at 700˚C, their responsiveness was poorer(**Fig. 10**).

A possible explanation for this low response may be the brookite phase contained in doped materials calcined at 600˚C; at this temperature the crystallinity of the brookite particles is improved with the consequent diminishing of surface defects, which affect the adsorption of oxygen species at the surface.

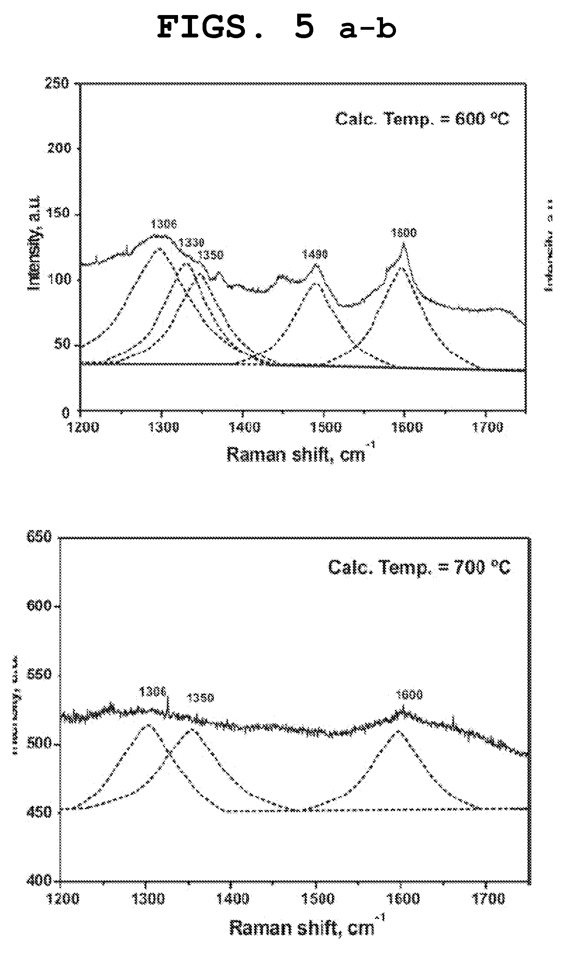

That is, the occurrence of a brookite phase is even worse than the presence of rutile phase for the oxygen sensing properties of titania. Raman spectroscopy (**Fig.5**) shows another possible reason for the lower response of these low-temperature calcined materials. Some peaks corresponding to different carbon species were found in their structure. These deposits of carbon are contamination from the synthesis process, which could not be eliminated during the calcination. Table 1 below shows some Raman features in the range between 700 and 1750 cm-1, present in the spectrum of Nb-doped titania calcined at 600˚C and 700˚C.

**Table 1**

| Raman peak ($cm^{-1}$) | Correspondence |
|---|---|
| 1306 | Hexagonal diamond |
| 1330 | Cubic diamond |

(continued)

| Raman peak ($cm^{-1}$) | Correspondence |
|---|---|
| 1350 | D peak of microcrystalline graphite |
| 1490 | Contributions from the photon density of states in finite-size crystals of graphite |
| 1600 | G peak of graphite |

The problem with these deposits of carbon is that they cover the surface of the active material and hinder its interaction with oxygen. This is reflected in the lower response towards oxygen found for materials calcined at low temperatures.

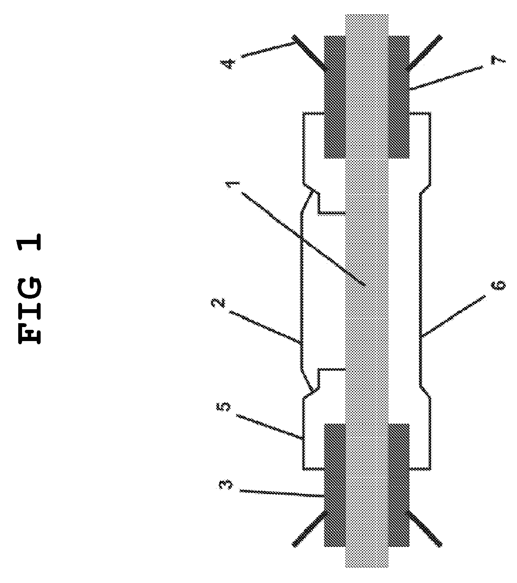

To determine the sensing capabilities of each material, they were deposited over alumina substrates that included contacts and a heater (**Fig. 1**). Then, they were tested under 20 ppm, 15 ppm and 10 ppm of $O_2$ in $N_2$ at different temperatures between 300˚C and 600˚C. These oxygen concentrations are far lower than those typically reported in the previous literature (i.e., near 1000 ppm).

Therefore, thick-film Nb-doped $TiO_2$ sensorscan be used to detect traces of oxygen (as low as 10 ppm) in $N_2$. Table 2 bellow shows responses of sensors made from Nb-doped titania calcined at 700˚C and working at 500˚C toward different oxygen concentrations.

**Table 2**

| Oxygen concentration in $N_2$ (ppm) | Sensor Response ($\Delta R/R_{N_2}$) | Error |
|---|---|---|
| 10 | 1.65 | 4.3 % |
| 15 | 1.78 | 2.7 % |
| 20 | 1.99 | 5.2 % |

This responsiveness compares favorably to previously published results where the concentrations of oxygen tested were significantly higher. Nb allows for anatase to be the dominant crystalline phase. This enables the sensor to work as a surface conductivity sensor and thus, to lower its optimal operating temperature down to 500˚C.

However, although said results in detecting oxygen are good, the problem with the deposits of carbon which cover the surface of the active material hinder its interaction with oxygen results in a low response towards oxygen for materials calcined at low temperatures.

Furthermore, a brookite crystalline phase is present in the doped materials calcined at 600˚C (see **Fig. 2-d**).

The highest responsiveness towards oxygen has been obtained for those materials calcined at 700˚C and at a working temperature of 500˚C. A high temperature of calcination ensures the elimination of the deposits of carbon from the synthesis process and diminishes the amount of brookite crystalline phase.

Then, there is still a need to find a new material with high responsiveness towards oxygen, high oxygen sensing properties, where the calcination temperature may decrease without negatively affect the response toward oxygen due to the presence of deposits of carbon or due to the presence of the brookite crystalline phase.

These problems will be solved by the hybrid material according to the present invention.

The present inventors have developed a new hybrid material which comprises a matrix of titanium dioxide including an anatase crystalline phase with carbon nanotubes dispersed within.

According to the present invention, the carbon nanotubes (CNT) may be hydrogen-functionalized carbon nanotubes. Preferably, multi-wall carbon nanotubes (MWCNT) were used. The carbon nanotubes to be hydrogen-functionalizing may be any one of the carbon nanotubes commercially available in the marked in which a hydrogen-functionalizing technique is applied. There are different hydrogen-functionalizing techniques which can be used to prepare hydrogen-functionalized carbon nanotubes, such as Wet chemistry (use of acids) [Satishkumar, J. Phys. D: Appl. Phys. 29, 3173 (1996)]; Treatment in reactive gas atmosphere) (plasma) [An, Appl. Phys. Lett., 80, 4235 (2002)] or Electrochemistry [Wang, Chem. Phys. Lett., 407, 68 (2005)].

Advantageously, the hybrid material would have a ratio of carbon nanotubes dispersed into titanium dioxide matrix from 0,0002 wt% to 0,02 wt%, preferably from 0,0001 wt% to 0,001 wt%, and more preferable from 0,0018 wt% to 0,0022wt%, wherein the weight percentage is referred to the weigh of titanium dioxide.

The hybrid material according to the present invention may further comprises niobium ions in the titanium dioxide matrix.

Surprisingly, the best results were obtained in a titanium dioxide matrix including an anatase crystalline phase with carbon nanotubes dispersed within, without Niobium ions in the titanium dioxide matrix.

Furthermore, it would be preferred that titanium dioxide comprising an anatase crystalline phase does not contain a brookite crystalline phase. The titanium dioxide may contains a rutile phase which is less harmful than brookite phase for the object of the present invention.

It is also an object of the present invention a microsensor comprising the hybrid material and a multisensor system comprising said microsensor.

Therefore, a process of making said hybrid material and said microsensor comprising the hybrid material is also an object of the present invention.

The invention provides a process of making an hybrid material wherein the following steps are carried out:

i) preparing a solution of a titanium precursor and an organic solvent under inert atmosphere until the precursor(s) were diluted in said organic solvent, optionally, proceeding the process under normal atmosphere;
ii) preparing an acid solution comprising water and an acidic agent; then, under stirring,
iii) adding the solution obtained in step i) and hydrogen-functionalized carbon nanotubes to the acid solution obtained in step ii) to proceed hydrolysis without forming a precipitate and to give rise a sol;
iv) adding a basic solution to the sol obtained in step iii) for completing gelification;
v) evaporating water from the gel obtained in step iv);
vi) milling the dried gel to reach a powder; and
vii) calcining said powder at a temperature ranging from 450˚C to 800˚C.

In the case niobium ions are further present in said titanium oxide matrix, the solution of step i) further comprises a precursor of niobium.

Preferably, the calcination temperature of step vii) was carried out at a temperature ranging from 500˚C to 600˚C.

The invention also provides a process of making a microsensor comprising the hybrid material wherein the following steps are carried out:

i) providing a substrate with a pair of electrodes thereon;
ii) coating an organic vehicle containing an hybrid material powder onto the substrate;
iii) annealing the coating at a temperature that will be lower than the calcination temperature used for making the hybrid material and be equal or higher than the working/operating temperature of the microsensor.

Accordingly, with the present invention, the obtained microsensor may be used for detecting traces of oxygen in a stream of gas containing oxygen at an optimum working/operating temperature of 350˚C.

The obtained microsensor is useful for detecting traces of oxygen in beverage industry.

Following, the making of a microsensor comprising said hybrid material is described in more detail.

## Preferred embodiments of the invention

### Hybrid material

Two types of active materials were prepared using a sol-gel procedure. The first type consisted of either pure or niobium-doped titanium oxide and the second type consisted of pure or Nb-doped titanium oxide with carbon nanotubes.

* Pure or niobium-doped titanium oxide was prepared as follows:

Non-doped $TiO_2$ samples were synthesized through a sol-gel route, starting from an alkoxide precursor. Following the experiment Titanium (IV) isopropoxide, also called tetraisopropyl orthotitanate $Ti[OCH(CH_3)_2]_4$ 99 % purity, was mixed with isopropanol to get a 0.5 M solution to avoid early precipitations of oxides.

In the case of Nb-doped $TiO_2$, Niobium ethoxide, $Nb(OC_2H_5)_5$ 99.99 %, was also added to a 0.5 M solution of tetraisopropyl orthotitanate mixed with isopropanol in the appropriate concentration to obtain an Nb/Ti atomic ratio of 3%.

Due to the high ability for oxidation of organic precursors, this process should be done under inert atmosphere. The inert atmosphere was created by using an inflatable polyethylene chamber. The air inside the bag was taken out from it (vacuum was created) and nitrogen was introduced later. This procedure was repeated three times. After the precursors were diluted in isopropanol, the process could continue under normal atmosphere.

Another solution of water and nitric acid, $HNO_3$ 70%, was prepared in parallel. Then the mixture of organic precursors diluted in isopropanol was added, drop wise, to the acid solution under stirring. The final composition of the constituent was set preferred to satisfy $[Ti]:[HNO_3]:[H_2O] = 1:1:100$ in molar ratio. In the case of hydrolysis-condensation of titanium isopropoxide, increasing in the initial water concentration produced higher nucleation rates, which resulted in a decrease in average particle size. Due to the fact that the main factor on particle size is the effect of water concentration, the preferred example would have a ratio of water to titanium of $[H_2O]$:[Ti] of 1:100. Because of the large amount of nitric acid, the hydrolysis proceeded without forming a precipitate, giving rise to a transparent sol with a pH=1.

Afterwards, the pH of the sol was increased carefully by adding, drop wise, approximately 30 ml of an aqueous solution (1 M) of Ammonium Hydrogen Carbonate (pH=9), up to achieve a consistent gel.

The gel was dried in an oven UNE [Spanish standard rule] 300 from Memmert Co. First, the temperature was set to 120˚C for 20 hours to evaporate water. Then, temperature was increased to 250˚C for 10 hours to eliminate some compounds generated during synthesis. At the end, the gel was turned into big agglomeration of particles, in form of rocks. These big particles were milled to reach powder appearance.

The calcination was carried out in a programmable muffle Carbolite RWF [Resistance Wire Furnace] 1200. The synthesized material was, once milled, split in four parts to be calcined in air at 600˚C, 700˚C, 800˚C and 900˚C, respectively. A temperature ramp of 10˚C/min, was applied to reach each calcined temperature. Then, the samples remained at calcined temperature for 2 hours. To finish, a free cooling ramp was applied to the materials.

* Pure or Nb-doped titanium oxide with carbon nanotubes dispersed within was prepared as follows:

The standard sol-gel process was modified for this purpose. During the hydrolysis phase of the above sol-gel preparation of $TiO_2$, a small quantity of hydrogen - functionalized carbon nanotubes (CNT) was introduced. Preferred, hydrogen-functionalized MWCNT were used. The same procedure was also followed for obtaining Nb-doped $TiO_2$/CNT hybrids. Preferably, MWCNT were used. After the nucleation process, the preferred obtained hybrid materials would have a 0.002 wt% of multi-wall carbon nanotubes within the titanium dioxide. The materials were finally calcined at different temperatures ranging from 500˚C to 800˚C. The reason why nanotubes undergo a functionalisation in a hydrogen is twofold. On the one hand, this treatment promotes the dispersion of nanotubes on the $TiO_2$ matrix and additionally, it cleans the nanotube surface and creates defects, which results in more reactive nanotubes.

## Microsensor

The microsensor substrate was fabricated by multilayer thick film deposition of a Pt based heater 6, insulation layer and contacts 3, 4, to the hybrid material 2. A ruthenium oxide diffusion barrier layer 5 was employed to prevent inter-diffusion between the Pt from the contact pads 3 and connecting wires 4 and the gas-sensitive metal oxide (hybrid material). The use of a two-side construction (**Fig.1**) allows for miniaturizing the sensor chip. The final dimensions of the sensor chip were as small as 1.5 mm x 0.3 mm x 0.15 mm. The microsensor chip was bonded to a standard TO-8 package. The diameter of the package was ~ 10 mm.

The resulting powders obtained from the modified sol-gel procedure described above were dispersed in glycerol and then the resulting paste was dropped over the electrodes. The as-deposited films were dried at 300˚C using a temperature ramp. A temperature slope of 20˚C per minute was used to avoid the occurrence of cracks in the metal oxide layer.

Finally, the hybrid materials (active layer) were annealing for 2 hours. Microsensors whose hybrid material had been calcined at 600˚C were annealing here at 600˚C. The microsensors that employed a hybrid material calcined at 700˚C or higher were annealing here at 700˚C. Advantageously, the evaporating water and the calcining processes were made in situ using the heating element 6 of the sensors. A computer programmable power supply was employed.

The annealing temperature used in the process of making a microsensor should be at a temperature lower than the calcined temperature used for making hybrid material and equal or higher than the working/operating temperature desired to be used.

## Microsensor characterisation

In the first step, the morphology and crystalline phase of the different hybrid materials obtained were studied. The morphology of the hybrid materials, recorded by ESEM analysis, indicated only the presence of titania grains at the surface of the materials. However, images obtained from transversal sections of these hybrid materials revealed the presence of nanotubes in the titania matrix.

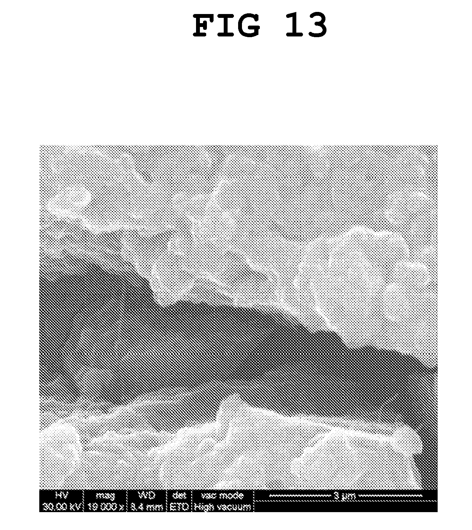

XRD analyses were subsequently performed in order to determine the phase of $TiO_2$ in the hybrid materials as a function of their calcination temperature. These results are shown in Fig 2-e. The spectra recorded for pure $TiO_2$ materials and MWCNT/$TiO_2$ hybrid materials were similar. In conclusion, the presence of MWCNT did not modify the crystalline phase of $TiO_2$, but modified the microstructure of the materials. The presence of MWCNTs within the titanium oxide matrix alters the morphology (e.g. porosity) of the gas-sensitive layer (hybrid material) and effects microsensor response (Fig 13).

Figure 2-e shows that anatase is the dominant crystalline phase in the materials calcined at the lowest temperature employed (i.e. 500˚C). A coexistence of rutile and anatase crystallites occurs for those materials calcined at 600°C. Finally, rutile is the dominant phase for materials calcined at 700°C or higher.

In the second step, the gas sensing characteristics of the fabricated hybrid materials were investigated upon exposure to trace levels of $O_2$ in a $CO_2$ flow (concentration of 11 ppm). This was done by employing calibrated gas bottles and a computer-driven measurement rig and several mass-flow controllers.

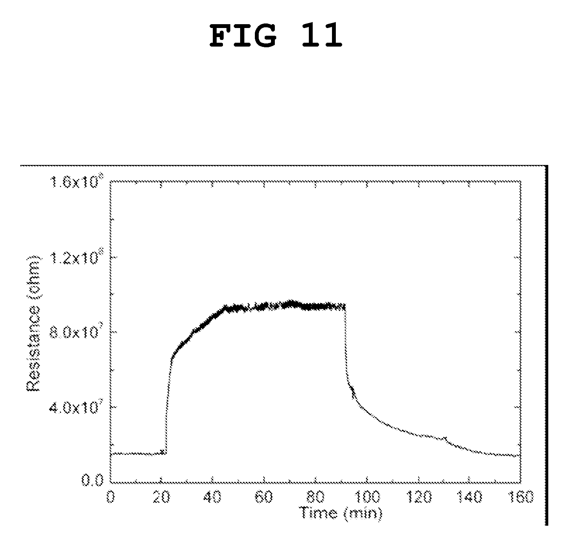

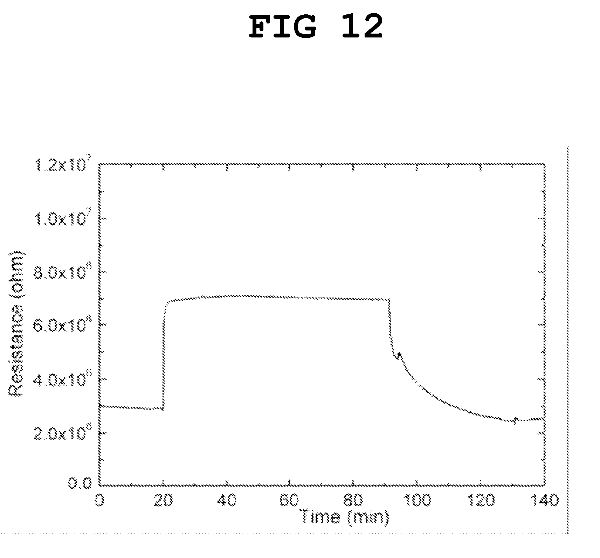

Surprisingly, the best responsiveness to $O_2$ was obtained by $TiO_2$/MWCNT hybrid materials operated at 350°C (see **Fig 11**). This responsiveness is approximately 20 times higher than the best responsiveness of pure $TiO_2$ films (operated at 500°C) and approximately 6 times higher than the best of Nb-doped $TiO_2$ films (also operated at 500°C). Furthermore, we also gained in lowering the optimal operating temperature for detecting oxygen. The response of Nb-doped $TiO_2$/MWCNT hybrid materials to $O_2$ (see **Fig 12**) was lower, but more than doubled the response of Nb-doped $TiO_2$ films.

The responsiveness towards oxygen was investigated for different operating temperatures. Microsensor responsiveness was defined by equation 1.

$$R = [R(O_2) - R(CO_2)]/R(CO_2) \qquad (1)$$

where $R(O_2)$ is sensor resistance in the presence of 11 ppm $O_2$ and $R(CO_2)$ is sensor resistance in pure carbon dioxide. Table 3 below shows a summary of the responsiveness study for the best microsensors obtained (OT is operating temperature and R is responsiveness):

**Table 3**

| ***Hybrid material + calcination temp . °C*** | ***Microsensor annealing temp . (°C)*** | ***OT (°C)*** | ***R*** |
|---|---|---|---|
| $TiO_2$+CNT (500°C) | 450 | 350 | **5.9** |
| $TiO_2$+CNT (600°C) | 550 | 350 | **6.5** |
| $TiO_2$+CNT (500°C) | 450 | 450 | 1.7 |
| $TiO_2$+CNT (600°C) | 550 | 450 | 1.6 |
| $TiO_2$ (600°C) | 600 | 500 | 0.3 |

Advantageously, these hybrid titanium dioxide and MWCNT materials were insensitive to methane and ethylene, so they show good potential as selective oxygen sensors.

Therefore, it is also the object of the present invention a microsensor comprising the hybrid material, and a multisensor system comprising said microsensor.

## Claims

**1.** Hybrid material which comprises a matrix of titanium dioxide including an anatase crystalline phase with carbon nanotubes dispersed within.

**2.** Hybrid material according to claim 1, wherein said carbon nanotubes are hydrogen - functionalized carbon nanotubes.

**3.** Hybrid material according to claim 1 or 2, wherein said carbon nanotubes are dispersed in an amount from 0,0002 to 0,02 wt% of the weight of the titanium oxide.

**4.** Hybrid material according to claim 3, wherein said carbon nanotubes are dispersed in an amount from 0,0001 to 0,001 wt% of the weight of the titanium oxide.

**5.** Hybrid material according to claim 1, wherein said matrix of titanium dioxide comprises an anatase crystalline phase with the proviso that a brookite crystalline phase is not present.

**6.** Hybrid material according to claim 1, wherein said matrix of titanium dioxide is doped with niobium ions.

**7.** Process of making an hybrid material according to any one of claims 1 to 6, **characterized in that** comprises the following steps:

i) preparing a solution of a titanium precursor and an organic solvent under inert atmosphere until the precursor (s) were diluted in said organic solvent;
ii) preparing an acid solution comprising water and an acidic agent; then, under stirring,
iii) adding the solution obtained in step i) and hydrogen-functionalized carbon nanotubes to the acid solution obtained in step ii) to proceed hydrolysis without forming a precipitate and to give rise a sol;
iv) adding a basic solution to the sol obtained in step iii) for completing gelification;
v) evaporating water from the gel obtained in step iv);
vi) milling the dried gel to reach a powder; and
vii) calcining said powder at a temperature ranging from 450˚C to 800˚C.

**8.** Process according to claim 7, wherein being niobium ions in said matrix of titanium dioxide present, the solution of step i) further comprises a precursor of niobium.

**9.** Microsensor comprising an hybrid material according to any one of claims 1 to 6 deposited on a substrate for detecting traces of oxygen.

**10.** Method of making a microsensor comprising:

i) providing a substrate with a pair of electrodes thereon;
ii) coating an organic vehicle containing an hybrid material powder obtained according to any one of claims 1 to 8 onto the substrate;
iii) annealing the coating at a temperature lower than the calcined temperature used for making hybrid material and equal or higher than the operating temperature of the microsensor.

**11.** Use of a microsensor according to claim 9, for detecting traces of oxygen in a stream of carbon dioxide containing oxygen.

**12.** Use according to claim 11, for detecting traces of oxygen in the beverage industry.

**13.** Microsensor according to claim 9, wherein said microsensor is an oxygen sensor.

FIG 1

4
7
1
2
6
5
3

# FIGS. 2 a-b

Anatase
Rutile
900°C
800°C
700°C
600°C
Intensity, a.u.
20
25
30
35
40
45
2Θ, degree

Phase transition ($TiO_2$)
Percentage (%)
0
20
40
60
80
100
0
49
51
0
2
98
0
0
100
0
0
100
600
700
800
900
Temperature (°C)
Brookite
Anatase
Rutile

# FIGS. 2 c-d

Anatase
Rutile
900°C
800°C
700°C
600°C
Intensity, a.u.
20
25
30
35
40
45
2θ, degree

Phase transition ($TiO_2$ + Nb)

Percentage (%)
100
80
60
40
20
0
25
73
2
9
70
21
0
12
88
0
0
100
600
700
800
900
Temperature (°C)
Brookite
Anatase
Rutile

# FIG. 2 -e

Rutile
Anatase
Intensity, a.u.
800 °C
700 °C
600 °C
500 °C
20
25
30
35
40
2θ, degree

# FIG. 3

brookyte
anatase
rutile
TiO2
Nb-doped TiO2
Log10 (FWHM)
2x10-2
1x10-2
8x10-3
6x10-3
4x10-3
2x10-3
600
700
800
900
Temperature (°C)

# FIGS. 4 a-b

Anatase
Rutile
TiO2
Calc. Temp.
Intensity a.u.
600°C
700°C
800°C
900°C
100
200
300
400
500
600
Raman shift, cm-1

Anatase
Rutile
Nb-doped TiO2
Calc. Temp.
600°C
700°C
800°C
900°C
100
200
300
400
500
600
Raman shift, cm-1

# FIGS. 5 a-b

Calc. Temp. = 600 °C
Intensity, a.u.
Raman shift, cm-1
1306
1330
1350
1490
1600
250
200
150
100
50
0
1200
1300
1400
1500
1600
1700

Calc. Temp. = 700 °C
Raman shift, cm-1
1306
1350
1600
650
600
550
500
450
400
1200
1300
1400
1500
1600
1700

# FIGS. 6

50
40
30
20
10
0
$S_{BET}$ ($m^2$/g)
600
700
800
900
Temperature (°C)
$TiO_2$ + Nb
$TiO_2$

Quantity adsorbed (cm³/gSTP)
Relative pressure (P/Po)
Δ Adsorption
■ Desorption
600 °C
700 °C
800 °C
900 °C
Quantity adsorbed (cm³/gSTP)
Relative pressure (P/Po)
Δ Adsorption
■ Desorption
600 °C
700 °C
800 °C
900 °C

FIGS. 7 a-b

# FIGS. 8 a-h

TiO2, 600 °C
TiO2 + Nb 600 °C
TiO2, 700 °C
TiO2 + Nb 700 °C
TiO2, 800 °C
TiO2 + Nb 800 °C
TiO2, 900 °C
TiO2 + Nb 900 °C

TiO2
Response (ΔR/RN)
0,10
0,15
0,20
0,25
0,30
0,35
300
400
500
600
Working Temperature (°C)
Calc. Temp.
600°C
700°C
800°C
900°C
Nb-doped TiO2
Response (ΔR/RN)
0,0
0,2
0,4
0,6
0,8
1,0
1,2
1,4
1,6
1,8
2,0
300
400
500
600
Working Temperature (°C)
Calc. Temp.
600°C
700°C
800°C
900°C

FIGS. 9 a-b

Resistance (Ω)
Time (minutes)
$N_2$
20 ppm $O_3$
$TiO_2$
Calc. tempt = 600 °C
Work. tempt = 500 °C
$N_2$
Resistance (Ω)
Time (minutes)
$N_2$
$TiO_2$ + Nb
Calc. tempt = 700 °C
Work. tempt = 500 °C
20 ppm $O_3$
$N_2$

FIGS. 10 a-b

# FIG 11

1.6x10^8
1.2x10^8
8.0x10^7
4.0x10^7
0.0
Resistance (ohm)
0
20
40
60
80
100
120
140
160
Time (min)

# FIG 12

1.2x10^7
1.0x10^7
8.0x10^6
6.0x10^6
4.0x10^6
2.0x10^6
0.0
Resistance (ohm)
0
20
40
60
80
100
120
140
Time (min)

# FIG 13

HV
mag
WD
det
vac mode
3 µm
30.00 kV
19 000 x
8.4 mm
ETD
High vacuum

European Patent Office

# EUROPEAN SEARCH REPORT

Application Number
EP 07 10 9882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUANGJUN HU ET AL: "Anatase TiO2 nanoparticles/carbon nanotubes nanofibers: preparation, characterization and photocatalytic properties" JOURNAL OF MATERIALS SCIENCE, KLUWER ACADEMIC PUBLISHERS, BO, vol. 42, no. 17, 10 May 2007 (2007-05-10), pages 7162-7170, XP019503554 ISSN: 1573-4803 * the whole document * ----- | | INV. G01N27/12 |

| TECHNICAL FIELDS SEARCHED (IPC) |
|---|
| G01N |

The present search report has been drawn up for all claims

| Place of search | Date of completion of the search | Examiner |
|---|---|---|
| Munich | 15 April 2008 | Sala, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **R.K. SHARMA ; M.C. BHATNAGAR.** Improvement of the oxygen gas sensitivity in doped TiO2 thick films. *Sens. Actuators B: Chem.,* 1999, vol. 56, 215-219
- **Y.HU ; O.K. TANG ; J. S. PAN ; H. HUANG ; W. CAO.** The effect of annealing temperature on the sensing properties of low temperature nano-sized SrTiO3 oxygen gas sensor. *Sens. Actuators B: Chem.,* 2005, vol. 108, 244-249
- **U. KIRNER ; K.D. SCHIERBAUM ; W. GOPEL ; B. LEIBOLD ; N. NICOLOSO ; W. WEPPNER ; D. FISCHER ; W. F. CHU.** Low and high-temperature TiO2 oxygen sensors. *Sens. Actuators B: Chem.,* 1990, vol. 1, 103-107
- **H. TANG ; K. PRASAD ; R. SANJINÉS ; F. LÉVY.** TiO2 Anatase thin films as gas sensors. *Sens. Actuators B: Chem.,* 1995, vol. 26 (1-3), 71-75
- **J. ARBIOL ; J. CERDÀ ; G. DEZANNEAU ; A. CIRERA ; F. PEIRÓ ; A. CORNET ; J. R. MORANTE.** Effects of Nb doping on the TiO2 anatase-to-rutile phase transition. *J. Appl. Phys.,* 2002, vol. 92, 853-861
- **A. RUIZ ; G. DEZANNEAU ; J. ARBIOL ; A. CORNET ; J.R. MORANTE.** Study of the influence of Nb content and sintering temperature on TiO2 sensing films. *Thin Solid Films,* 2003, vol. 436, 90-94
- **J. ARBIOL ; J. CERDÀ ; G. DEZANNEAU ; A. CIRERA ; F. PEIRÓ ; A. CORNET ; J. R. MORANTE.** Effects of Nb doping on the TiO2 anatase-to-rutile phase transition. *J. Appl.Phys.,* 2002, vol. 92, 853-861
- **SATISHKUMAR.** *J. Phys. D: Appl. Phys.,* 1996, vol. 29, 3173
- **AN.** *Appl. Phys. Lett.,* 2002, vol. 80, 4235
- **WANG.** *Chem. Phys. Lett.,* 2005, vol. 407, 68